# EUROPEAN PATENT APPLICATION

(11) **EP 4 685 946 A1**
(43) Date of publication of application: **28.01.2026**
(21) Application number: 25150316.5
(22) Date of filing: 06.01.2025
(51) Int. Cl.: H01M 50/204, H01M 50/325

(54) **BATTERY PACK**

(30) Priority: 24.07.2024 KR 20240097805
(71) Applicant: SAMSUNG SDI CO., LTD., Yongin-si, Gyeonggi-do 17084 (KR)
(72) Inventor: NAM, Joong Woo, 16678 Suwon-si (KR)
(74) Representative: Marks & Clerk LLP

(57) **Abstract**

A battery pack includes a pack case with a battery module, a vent hole in the pack case, the vent hoe being configured to discharge to the outside gas generated inside the pack case, and an opening/closing member in the vent hole, the opening/closing member being configured to open and close the vent hole in conjunction with a change in an internal pressure of the pack case.

## Description

### BACKGROUND

### 1. Field

The present disclosure relates to a battery pack.

### 2. Description of the Related Art

In general, as the demand for portable electronic products such as laptops, video cameras, and portable phones rapidly increases and robots, electric vehicles, and the like are commercialized, research on high-performance secondary batteries capable of repeated charging and discharging is actively underway. Particularly, since lithium secondary batteries have a high energy density and operating voltage and excellent storage and lifetime characteristics, the lithium secondary batteries may be used as energy sources for various electronic products.

The above-described information disclosed in the technology that forms the background of the present disclosure is only intended to improve understanding of the background of the present disclosure, and thus may include information that does not constitute the related art.

### SUMMARY

According to the present invention there is provided a battery pack, comprising: a pack case with a battery module; a vent hole in the pack case, the vent hole being configured to discharge to the outside gas generated inside the pack case; and an opening/closing member in the vent hole, the opening/closing member being configured to open and close the vent hole in conjunction with a change in an internal pressure of the pack case.

In some embodiments, the opening/closing member includes: at least one elastic member, for example on the pack case, the at least one elastic member being deformable by the change in the internal pressure of the pack case to open and close the vent hole; and a magnetic member on the at least one elastic member, the magnetic member being configured to generate a magnetic force.

In some embodiments, the magnetic member is insert-injected onto the at least one elastic member.

In some embodiments, the opening/closing member further includes a frame, for example on the pack case, the frame including an opening corresponding to the vent hole, and the at least one elastic member being fixed to the frame and overlapping the vent hole.

In some embodiments, the opening/closing member is configured to open when the internal pressure of the pack case is 120 mbar or higher.

In some embodiments, the at least one elastic member includes a pair of elastic members facing each other, the magnetic member being bonded to each of the pair of elastic members and defining an interface between the pair of elastic members.

In some embodiments, the magnetic member at the interface has a multi-stepped shape.

In some embodiments, the magnetic member at the interface has an inclined surface.

In some embodiments, each of the pair of elastic members includes a plurality of cover portions and a joint portion connecting the plurality of cover portions to each other, and each of the pair of elastic members is configured to sequentially open from the interface according to the internal pressure of the pack case.

In some embodiments, the joint portion has a smaller thickness than each of the plurality of cover portions.

In some embodiments, each of the plurality of cover portions includes a core portion, and the joint portion includes an elastic material.

In some embodiments, the core portion is insert-injected into a corresponding one of the plurality of cover portions.

In some embodiments, a length of each of the plurality of cover portions in a first direction decreases toward the interface.

In some embodiments, each of the plurality of cover portions includes a first cover portion, a second cover portion, and a third cover portion arranged in a direction oriented from an outside to a center of the vent hole, a length ratio of the first cover portion, the second cover portion, and the third cover portion being 5:3:2, respectively.

In some embodiments, the at least one elastic member includes a plurality of elastic members divided radially based on a center of the vent hole, the magnetic member being at an interface of each of the plurality of elastic members.

In some embodiments, each of the plurality of elastic members includes an extension piece at one side thereof, the extension piece being in contact with a top surface of a neighboring elastic member of the plurality of elastic members.

In some embodiments, the opening/closing member further includes: a frame on the pack case that includes an opening overlapping the vent hole; the at least one elastic member being a single elastic member fixed to the frame and overlapping the vent hole; the magnetic member at an end of the single elastic member; and an attachment portion on the frame that corresponds to the magnetic member, the attachment portion being attached by the magnetic force of the magnetic member.

In some embodiments, a first side of the single elastic member is fixed to the frame, the magnetic member is fixed to a second side of the single elastic member, the second side being opposite to the first side, and the attachment portion overlaps and contacts the magnetic member.

In some embodiments, the single elastic member includes: a plurality of cover portions, a length of each of the plurality of cover portions in a first direction decreasing from the first side to the second side; and a joint portion connecting the plurality of cover portions to each other.

According to an example embodiment, there is provided a battery pack that includes a pack case provided with a battery module, a vent hole formed in the pack case and configured to discharge gas generated inside of the pack case to the outside, and an opening/closing member provided in the vent hole and configured to open and close the vent hole in conjunction with a change in internal pressure of the pack case.

The opening/closing member may include an elastic member that is elastically deformed by the change in internal pressure of the pack case and opens and closes the vent hole and a magnetic member disposed on the elastic member and generating a magnetic force.

The magnetic member may be insert-injected onto the elastic member.

The opening/closing member may include a frame in which an opening corresponding to the vent hole is formed, to which the elastic member is fixed, and which is mounted on the pack case.

The opening/closing member may open when the internal pressure of the pack case is 120 mbar or higher.

A pair of elastic members may be formed to face each other, and the magnetic member may be disposed at and bonded to each interface of each of the elastic members.

The bonded surfaces of the magnetic members may be formed as multi-stepped surfaces corresponding to each other.

The bonded surfaces of the magnetic members may be formed as inclined surfaces corresponding to each other.

The elastic member may include a plurality of cover portions and a joint portion connecting the plurality of cover portions to each other, and the elastic member may be sequentially opened from the interface according to the internal pressure of the pack case.

The joint portion may be formed to have a smaller thickness than the cover portion.

The cover portion may include a core portion, and the joint portion may be made of an elastic material.

The core portion may be insert-injected into the cover portion.

A length of each of the plurality of cover portions in a first direction may become smaller toward the interface.

The cover portions may include a first cover portion, a second cover portion, and a third cover portion that are disposed in a direction from the outside towards the center of the vent hole, and a length ratio of the first cover portion, the second cover portion, and the third cover portion may be 5:3:2.

A plurality of elastic members may be provided, and the plurality of elastic members may be divided radially based on the center of the vent hole, and the magnetic member may be formed at an interface of each of the elastic members.

The elastic member may include an extension piece that is formed at one side thereof and that is in contact with a top surface of a neighboring elastic member.

The opening/closing member may include a frame in which an opening corresponding to the vent hole is formed and which is mounted on the pack case, the elastic member that covers the opening of the frame, is elastically deformed by the internal pressure of the pack case, and opens and closes the vent hole, and the magnetic member that is provided on the elastic member and generates a magnetic force, and the frame may include an attachment portion that corresponds to the magnetic member and is attached by the magnetic force of the magnetic member.

One side of the elastic member may be fixed to the frame, the magnetic member may be fixed to the other side of the elastic member, and the frame may include an attachment portion that corresponds to the magnetic member and is attached by the magnetic force of the magnetic member.

The elastic member may include a plurality of cover portions and a joint portion connecting the plurality of cover portions to each other, and a length of each of the plurality of cover portions in a first direction may become smaller from one side to the other side of the elastic member.

At least some of the above and other features of the invention are set out in the claims.

### BRIEF DESCRIPTION OF THE DRAWINGS

Features will become apparent to those of skill in the art by describing in detail embodiments with reference to the attached drawings, in which:
FIG. 1 is a view schematically showing a configuration of a battery pack according to an example embodiment;
FIG. 2 is a perspective view schematically showing an opening/closing member according to an example embodiment;
FIG. 3 is an exploded perspective view schematically showing the opening/closing member according to an example embodiment;
FIG. 4 is a cross-sectional view along line A-A of FIG. 2;
FIG. 5 is a cross-sectional view along line B-B of FIG. 2;
FIGS. 6A to 6C are a set of views showing various cross-sectional shapes of an interface of the opening/closing member according to an example embodiment;
FIG. 7 is a view for describing the operation of the opening/closing member according to an example embodiment;
FIG. 8 is a perspective view schematically showing an opening/closing member according to another example embodiment;
FIG. 9 is a cross-sectional view along line C-C of FIG. 8;
FIG. 10 is a view showing a different form of a cover portion of the opening/closing member according to another example embodiment;
FIG. 11 is a view for describing an operation of the opening/closing member in FIG. 8;
FIG. 12 is a cross-sectional view showing a first modified example of the opening/closing member according to another example embodiment;
FIG. 13 is a perspective view schematically showing an opening/closing member according to yet another example embodiment;
FIG. 14 is a cross-sectional view along line D-D of FIG. 12;
FIG. 15 is a view for describing an operation of the opening/closing member in FIG. 13;
FIG. 16 is a perspective view schematically showing an opening/closing member according to still another example embodiment;
FIG. 17 is a cross-sectional view along line E-E of FIG. 16; and
FIG. 18 is a view for describing an operation of the opening/closing member I FIG. 16.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. In addition, it will also be understood that when a layer is referred to as being "between" two layers, it can be the only layer between the two layers, or one or more intervening layers may also be present. Like reference numerals refer to like elements throughout.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

As used herein, the term "and/or" includes any and all combinations of one or more of the associated listed items. Further, the use of "may" when describing embodiments of the present disclosure relates to "one or more embodiments of the present disclosure." Expressions, such as "at least one of' and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

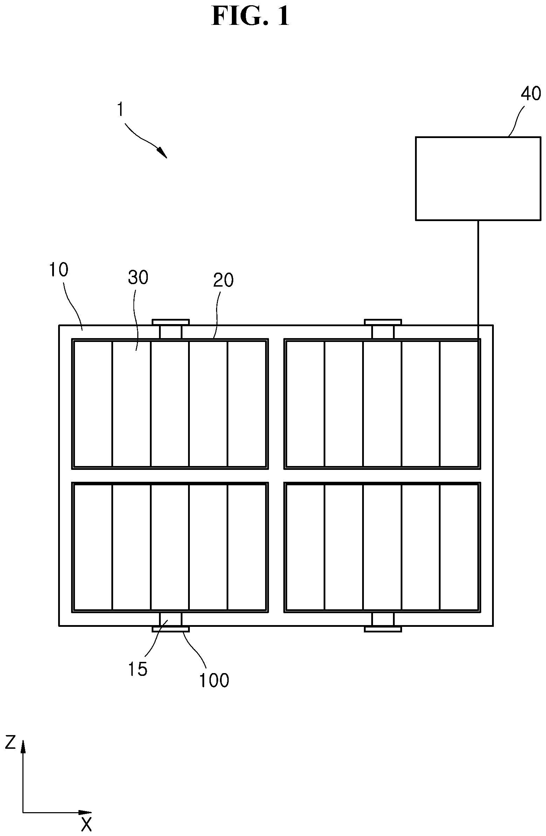

FIG. 1 is a view schematically showing a configuration of a battery pack according to an example embodiment.

Referring to FIG. 1, a battery pack 1 according to an example embodiment may include a pack case 10, a vent hole 15, and an opening/closing member 100.

The pack case 10 may function as a component that supports a battery module 20 and protects the battery module 20 from an external impact and foreign substances. The pack case 10 may provide a space for accommodating the battery module 20 therein. The pack case 10 may include a case body and a case cover.

The case body of the pack case 10 may be formed to have the shape of a box with an empty interior and one open side. For example, the open side of the case body may be disposed to face upward. In addition, the battery module 20 may be provided inside the case body.

The case cover of the pack case 10 may be coupled to the case body and may close the inner space of the case body. For example, the case cover may be formed to have a plate shape, i.e. it may be substantially plate-shaped. The case cover may be disposed to face the open side of the case body, e.g., an upper surface of the case body. The case cover may be fixed to the case body by various types of coupling methods, e.g., bolting, welding, and fitting.

The battery module 20 may include a plurality of battery cells 30 that are electrically connected and an alignment member that aligns the battery cells 30. The battery cell 30 may function as a unit structure for storing and supplying power in the battery module 20. The battery cell 30 may be disposed inside a cell case. This battery cell 30 may be designed in various shapes, e.g., prismatic, circular, and elliptical shapes, and may be configured in the battery module 20 by the alignment member.

The pack case 10 may include a controller 40 for controlling and protecting the battery module 20. The controller 40 may be outside the pack case 10.

The controller 40 may include at least one of a battery control unit (BCU), a battery management system (BMS), and a battery disconnect unit (BDU), and may measure, e.g., a voltage, a state of charge (SOC), a temperature, etc. of the battery module 20. The controller 40 may cut off power in case of an abnormality occurring in the battery pack 1, e.g., an overcurrent or overvoltage state. Since the controller 40 may include electronic components, circuits, etc., and may be sensitive to moisture, the controller may be provided outside the pack case 10.

For example, if the controller 40 and the battery module 20 were to be disposed in the same space, condensation occurring due to a sudden change in temperature of the battery module 20 could affect the controller 40, thereby interfering with the operation of the controller 40. In another example, if the controller 40 and the battery module 20 were to be disposed in the same space, cooling air for cooling the battery module 20 could affect the controller 40, thereby causing malfunction in the controller 40.

The pack case 10 may include the vent hole 15 for discharging gas generated inside the pack case 10 to the outside. The vent hole 15 may serve as a passage connecting the inside to the outside of the pack case 10 and may be formed by passing through the pack case 10, e.g., through a sidewall of the case body of the pack case 10. The vent hole 15 may be formed in various shapes, e.g., rectangular and/or elliptical shapes.

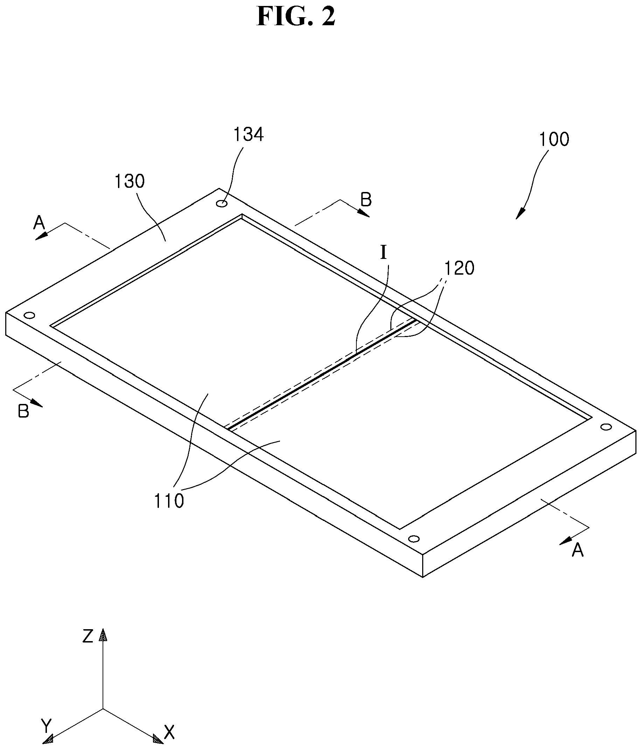

The pack case 10 may be provided with the opening/closing member 100, e.g., a moveable gate, for opening and closing the vent hole 15. The opening/closing member 100 will be described in more detail below with reference to FIGS. 2-5.

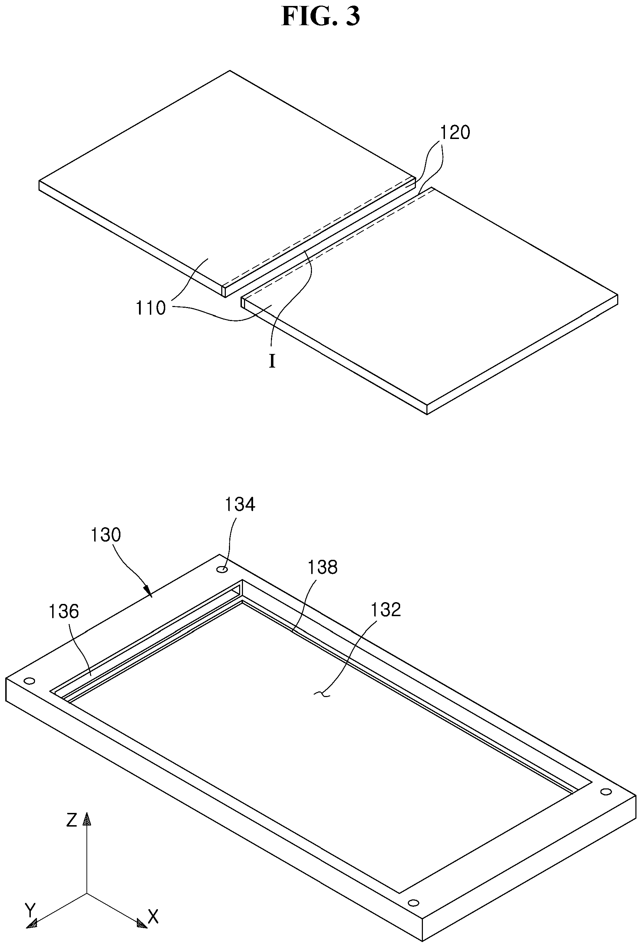

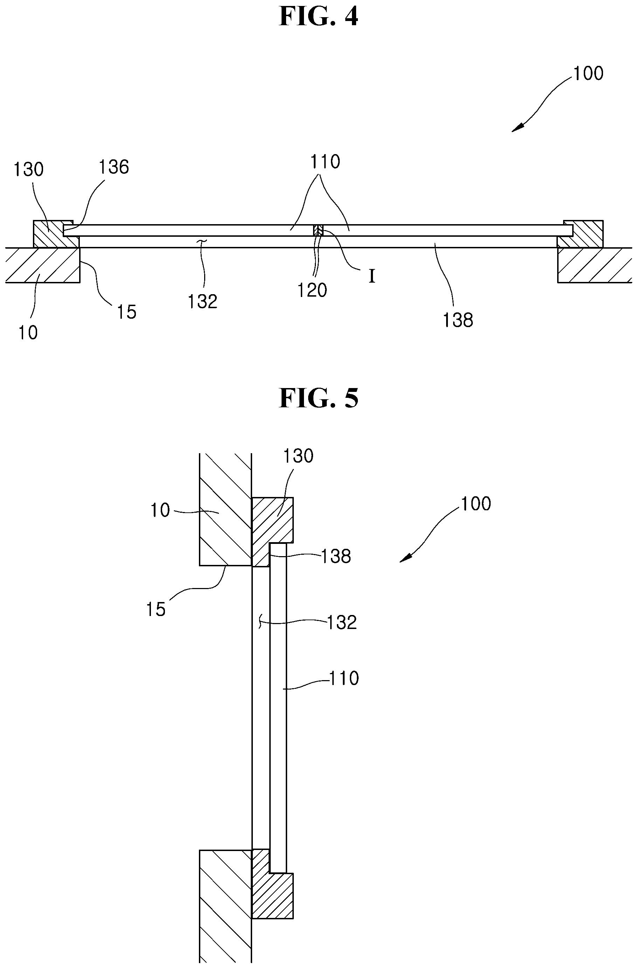

FIG. 2 is a perspective view schematically showing the opening/closing member 100, FIG. 3 is an exploded perspective view schematically showing the opening/closing member 100, FIG. 4 is a cross-sectional view along line A-A of FIG. 2, and FIG. 5 is a cross-sectional view along line B-B of FIG. 2.

Referring to FIGS. 2 to 5, the opening/closing member 100 may function as a component that is provided in the vent hole 15 and opens and closes the vent hole 15 in response to a change in internal pressure of the pack case 10. The opening/closing member 100 may include an elastic member 110 that is elastically deformable by the change in internal pressure of the pack case 10 and opens and closes the vent hole 15, and a magnetic member 120 that is provided on the elastic member 110 and generates a magnetic force.

The elastic member 110 may be made of a synthetic resin. The elastic member 110 may be formed by injection molding of a synthetic resin and may be manufactured in various shapes corresponding to a shape of the vent hole 15.

The magnetic member 120 may be made of a magnet that generates a magnetic force. The magnet may be integrated with the elastic member 110 by injection molding of the above-described elastic member 110. That is, the elastic member 110 may be insert-injected around the periphery of the magnet forming the magnetic member 120 to form the opening/closing member 100.

In detail, the elastic member 110 may be formed of a polymer that is elastic and capable of withstanding high temperatures and may be insert-injected together with the magnetic member 120. For example, referring to FIG. 3, the elastic member 110 and the magnetic member 120 may be integrally formed (e.g., as one structure) by insert injection. In another example, the magnetic member 120 may be coupled to the elastic member 110 by a separate fastening member, e.g., an adhesive.

In an example embodiment, the opening/closing member 100 may be opened when the internal pressure of the pack case 10 is 120 mbar or higher.

A first direction to be described below may be parallel to an X-axis based on FIGS. 2 and 3, and may be a longitudinal direction of the opening/closing member 100. A second direction may be parallel to a Y-axis based on FIGS. 2 and 3, and may be a width direction of the opening/closing member 100. A third direction may be parallel to a Z-axis based on FIGS. 2 and 3, and may be a thickness direction of the opening/closing member 100 and a direction from the vent hole 15 toward the opening/closing member 100.

The opening/closing member 100 according to the present embodiment may include a frame 130 in which an opening 132 corresponding to the vent hole 15 is formed. The frame 130 may be mounted on the pack case 10, such that the opening 132 faces (e.g., covers or overlaps) the vent hole 15, and one end of the elastic member 110 may be fixed to the frame 130.

The frame 130 may function as a component that fixes the opening/closing member 100 to the pack case 10. A plurality of fastening holes 134 may be formed in the corners of the frame 130, and the frame 130 may be bolt-coupled to the pack case 10 through the fastening holes 134. For example, a sealing member may be provided on a bottom surface of the frame 130 to seal a gap between the frame 130 and the pack case 10.

Referring to FIG. 3, a pair of elastic members 110 may be formed to face each other in the frame 130, and the magnetic member 120 may be formed at an interface I of each elastic member 110. As shown in FIGS. 2 to 5, the pair of elastic members 110 may be formed and disposed in the first direction in a row (e.g., adjacent to each other in the X-axis). Each elastic member 110 may have one end (e.g., only one end) fixed to an edge of the frame 130 within the opening 132, and another end extending in the first direction to be attached to the adjacent elastic member 110 by the magnetic member 120. For example, referring to FIG. 3, the elastic members 110 may have secure (e.g., unmovable) ends attached to opposite ends of the frame 130 in the X-axis, and may have free (e.g., movable) ends facing each other and attached to each other by the magnetic members 120.

The elastic member 110 may be formed to have a larger length in the first direction than in the second direction. This may allow an opening direction of the elastic member 110 to be determined by a difference in strain rate per unit length when the elastic member 110 is opened by the internal pressure of the pack case 10.

Referring to FIGS. 3-4, the frame 130 and the elastic member 110 may be coupled to each other via a fixing groove 136. For example, the fixing groove 136 may be formed in an inner surface of the frame 130 to face the opening 132 (e.g., at opposite ends of the frame 130 in the length direction of the frame 130), such that the stable ends of the elastic member 110 may be inserted into the fixing grooves 136. For example, the elastic member 110 may be coupled with the fixing grooves 136 using an adhesive.

Referring to FIG. 3, a seating end 138 may be formed on the inner surface of the frame 130 facing the opening 132. Edges of the elastic member 110, excluding the stable end of the elastic member 110 inserted into the fixing groove 136, may be seated on the seating end 138. For example, referring to FIG. 3, the seating end 138 may be a ledge integral with the frame 130 and extending continuously from the bottom of the frame toward the opening 132, e.g., the seating end 138 may extend continuously around the entire perimeter of the opening 132. For example, referring to FIG. 5, the seating end 138 may extend into the opening 132, such that an edge of the seating end 138 may be substantially aligned with an edge of the vent hole 15. It is noted that in FIG. 4, the seating end 138 is illustrated as seen in the back of the opening 132.

For example, referring to FIG. 4, one end of each of the pair of elastic members 110 may be fixed in the fixing groove 136 of the frame 130 and extend in the first direction that is a direction in which the pair of elastic members 110 face each other to be attached by the magnetic member 120. In another example, the pair of elastic members 110 may each extend in the second direction to be coupled to each other by the magnetic member 120.

The interface I of the elastic member 110 may be formed by exposing a portion of the magnetic member 120 that is insert-injected onto the elastic member 110. That is, the magnetic members 120, which are made of magnets, may be exposed at facing surfaces of the elastic members 110 facing each other to be attached to each other by a magnetic force.

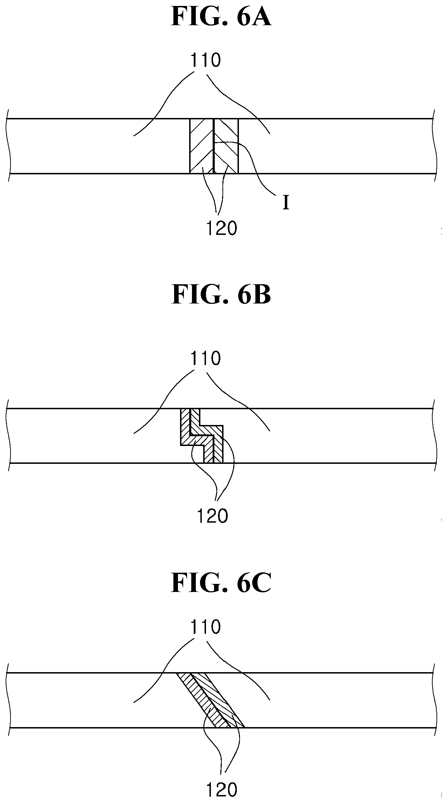

FIGS. 6A to 6C are a views showing various cross-sectional shapes of the interface I of the opening/closing member 100. For example, referring to FIG. 6A, portions of the magnetic members 120 extending in the second direction may be exposed at end portions of the elastic members 110 to form the interface I in a flat form (e.g., a linear cross-section that is substantially perpendicular to the seating end 138) at which the magnetic members 120 are attached to each other. In another example, referring to FIG. 6B, the interface I may be formed in a multi-stepped shape (e.g., a stepped or stair-shaped cross-section). In yet another example, referring to FIG. 6C, the interface I may be an inclined surface relative to the seating end 138, e.g., at an oblique angle. In FIGS. 6B and 6C, the interface I of the magnetic members 120 may have an increased contact area in order to increase attachment strength by the magnetic members 120.

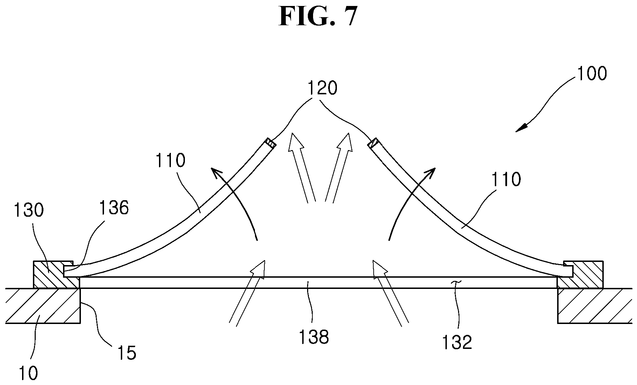

FIG. 7 is a view for describing the operation of the opening/closing member 100.

Referring to FIG. 7, the opening/closing member 100 may be disposed to face the vent hole 15 and may easily discharge internal gas according to the internal pressure of the pack case 10. The opening/closing member 100 may be composed of the elastic members 110 that are arranged in the first direction facing each other, and the magnetic members 120 are provided at the interface I of the elastic members 110 to seal the vent hole 15 by the magnetic force of the magnetic members 120.

The frame 130 may have the fastening holes 134 formed in the corners thereof and may be bolt-fastened near the vent hole 15, thereby improving assembly. The seating end 138 may be formed on the frame 130 and extend into the opening 132 (e.g., the seating end 138 may be directly on the pack case 10 to align the opening 132 with the vent hole 15), so that the edges of the elastic members 110, excluding the fixed edges, may be seated on the seating end 138 to allow the elastic members 110 to maintain a flat state, thereby further firmly sealing the vent hole 15. For example, referring to FIG. 7, the seating end 138 may be between the pack case 10 and the elastic members 110, so the elastic members 110 open away from the vent hole 15.

In some embodiments the frame 130 may have the fastening holes 134 formed in the corners thereof and may be bolt-fastened near the vent hole 15, thereby improving assemblability, and the seating end 138 may be formed on the inner surface of the opening 132 of the frame 130 so that the edges excluding the fixed portion of the elastic member 110 may be seated to allow the elastic member 110 to maintain a flat state, thereby further firmly sealing the vent hole 15.

When the internal pressure of the pack case 10 increases to a certain level or higher, the magnetic members 120 that have been attached by a magnetic force may be separated, and the elastic members 110 may be lifted in the third direction (i.e., away from the vent hole 15), thereby discharging the internal gas of the pack case 10 to the outside through the vent hole 15. Since one end of the elastic member 110 is fixed to the frame 130, the other end of each elastic member 110 may be bent and lifted by its own elastic force to discharge the gas.

Thereafter, when the internal pressure decreases due to the gas discharge, the elastic members 110 may be restored to their original positions by an elastic force, and the facing surfaces of the magnetic members 120 may come into contact with each other due to the restoration of the elastic members 110, thereby allowing the magnetic members 120 to be reattached by a magnetic force. Since the vent hole 15 may be resealed by the elastic force of the elastic members 110 and the magnetic force of the magnetic members 120, it is possible to semi-permanently use the opening/closing member 100 (i.e., to use the opening/closing member 100 multiple times), as compared to a vent that ruptures and is used only once.

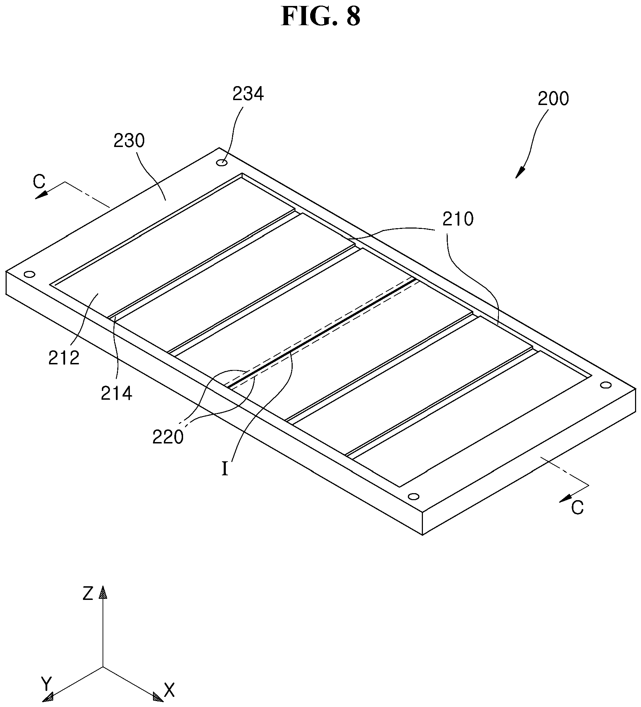

Hereinafter, an opening/closing member 200 according to another embodiment will be described with reference to FIGS. 8-11.

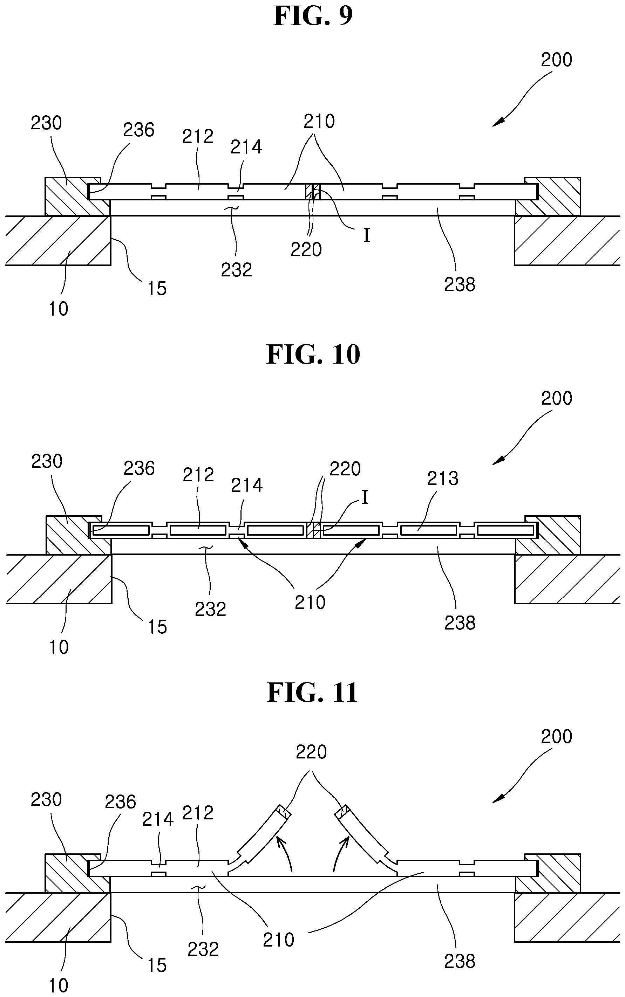

FIG. 8 is a perspective view schematically showing the opening/closing member 200, FIG. 9 is a cross-sectional view along line C-C of FIG. 8, FIG. 10 is a view showing a different form of a cover portion of the opening/closing member 200, and FIG. 11 is a view for describing the operation of the opening/closing member 200.

Referring to FIGS. 8 to 11, the opening/closing member 200 may include an elastic member 210 that is elastically deformed by a change in internal pressure of the pack case 10 and opens and closes the vent hole 15, and a magnetic member 220 is provided on the elastic member 210 and generates a magnetic force. A pair of elastic members 210 may be formed to face each other, and the magnetic member 220 may be formed at an interface I of each elastic member 210.

The opening/closing member 200 according to the present embodiment may include a frame 230, in which an opening 232 corresponding to the vent hole 15 is formed. One end of the elastic member 210 may be fixed to the frame 230, which may be mounted on the pack case 10.

The frame 230 may include fastening holes 234 that may be coupled to the pack case 10, a fixing groove 236 to which the one end of the elastic member 210 may be fixed, and a seating end 238 on which edges, excluding the fixed portion of the elastic member 210, may be seated. Since the frame 230 has the same configuration as the frame 130, described previously with reference to FIGS. 2-5, a detailed description thereof is not repeated.

The elastic member 210 may include a plurality of cover portions 212 and a joint portion 214 that connects the plurality of cover portions 212. The plurality of cover portions 212 may be disposed to be spaced apart from each other in the first direction, and the joint portion 214 may connect the cover portions 212 that are disposed to be spaced apart, e.g., the joint portion 214 may connect cover portions 212 that are adjacent to each other.

For example, referring to FIG. 9, the elastic member 210 may be composed of a single material. The elastic member 210 may be formed of a polymer that is elastic and capable of withstanding high temperatures. That is, the cover portion 212 and the joint portion 214 that form the elastic member 210 are made of a single (e.g., same) material, and the joint portion 214 may be formed to have a smaller thickness than the cover portion 212 (e.g., a smaller thickness in the third direction).

Since the joint portion 214 has a higher strain rate by being formed with a smaller thickness than the cover portion 212, the joint portion 214 may have a property of bending more than the cover portion 212. Therefore, the joint portion 214 may serve to control the degree of opening of the vent hole 15 according to the internal pressure of the pack case 10.

Due to this structural feature, as shown in FIG. 11, the elastic member 210 may be sequentially opened from the interface I according to the internal pressure of the pack case 10. For example, when a low pressure is applied inside the pack case 10, one set of cover portions 212 may open as the magnetic members 220 of the interface I are separated, and when a high pressure is applied inside the pack case 10, multiple sets of cover portions may open as the magnetic members 220 of the interface I are separated.

In another example, referring to FIG. 10, the cover portion 212 may include a rigid material, and the joint portion 214 may be made of an elastic material. In this case, the cover portion 212 may be provided with a core portion 213 made of a rigid material, e.g., steel or a magnet, and a polymer may be injected around the periphery of the core portion 213 to form the cover portion 212. That is, the core portion 213 may be insert-injected into the cover portion 212.

A plurality of core portions 213 may be disposed to be spaced apart, and an elastic material, e.g., a polymer, may be injected around the peripheries of the plurality of core portions 213 to form the joint portion 214 between the core portions 213. For example, the elastic material may be attached between the core portions 213, without being injected around the periphery of the core portion 213, to form the cover portion 212 and the joint portion 214.

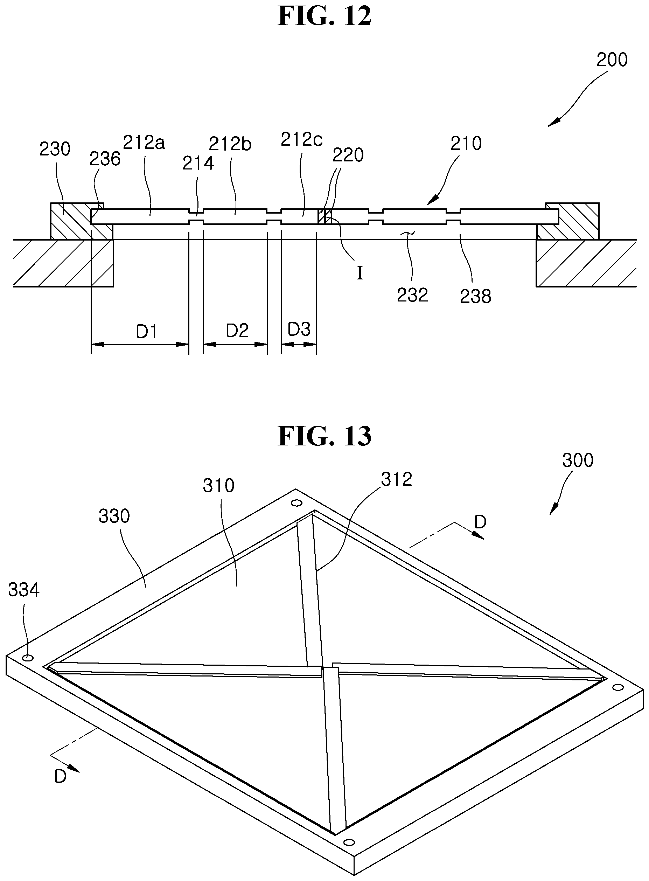

FIG. 12 is a cross-sectional view showing another example of the opening/closing member 200.

Referring to FIG. 12, the sizes of the separated cover portions 212 may vary to control the degree of opening of the vent hole 15 according to the internal pressure of the pack case 10. The plurality of cover portions 212 that are disposed to be spaced apart may be configured to have a smaller size toward the interface I of the elastic member 210. More specifically, a length of each of the plurality of cover portions 212 in the first direction may become smaller toward the interface I.

For example, the cover portion 212 may include a first cover portion 212a having a length D1, a second cover portion 212b having a length D2, and a third cover portion 212c having a length D3 that are disposed in a direction from the outside to the center of the vent hole 15, and a length ratio of the first cover portion 212a, the second cover portion 212b, and the third cover portion 212c may be 5:3:2, respectively.

For example, referring to FIG. 12, the number of cover portions 212 may be set to three, and an area ratio of each cover portion 212 is presented. In another example, the number and area ratio of cover portions 212 may be changed in various ways, and various modifications may be implemented to control the degree of opening of the vent hole 15 according to the internal pressure of the pack case 10. Due to this structural feature, as shown, individual opening is possible according to the magnitude of the internal pressure of the pack case 10, and it may quickly respond to the degree of pressure.

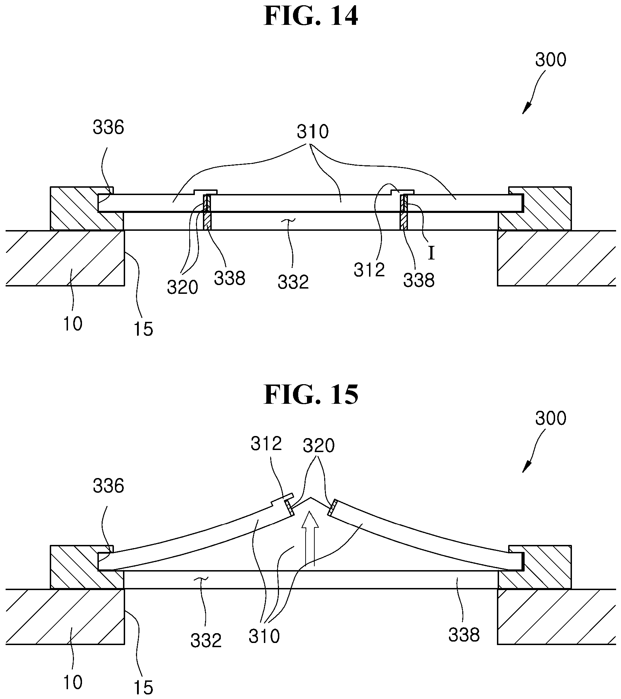

FIG. 13 is a perspective view schematically showing an opening/closing member 300 according to yet another embodiment, FIG. 14 is a cross-sectional view along line D-D of FIG. 12, and FIG. 15 is a view for describing the operation of the opening/closing member 300 in FIGS 13-14.

Referring to FIGS. 13 to 15, the opening/closing member 300 may include an elastic member 310 that is elastically deformed by a change in internal pressure of the pack case 10 and opens and closes the vent hole 15, and a magnetic member 320 that is provided on the elastic member 310 and generates a magnetic force. A plurality of elastic members 310 may be divided radially based on the center of the vent hole, and the magnetic member 320 may be formed at an interface I of each elastic member 310.

For example, referring to FIG. 13, the elastic member 310 may be divided into four elastic members 310 and formed in a triangular shape, as viewed in a top view. In another example, the number of divided elastic members 310 may be changed in various ways, e.g., the elastic member 310 may be formed in a circular shape, and accordingly, a frame 330 may also be formed in a circular shape.

The magnetic member 320 may be made of a magnet that generates a magnetic force. The magnet may be integrated with the elastic member 310 by injection molding of the above-described elastic member 310. The magnet forming the magnetic member 320 may be insert-injected onto two facing sides of the elastic member 310 formed in the triangular shape to form the opening/closing member 300.

The opening/closing member 300 according to the present embodiment may include the frame 330, in which an opening 332 corresponding to the vent hole 15 is formed. One end of the elastic member 310 may be fixed to the frame 330, and the frame 330 may be mounted on the pack case 10.

The frame 330 may have fastening holes 334 that may be coupled to the pack case 10, a fixing groove 336 to which the one end of the elastic member 310 may be fixed, and a seating rib 338 on which edges, excluding the fixed portion of the elastic member 310, may be seated. The seating rib 338 may be formed along a perimeter of the opening and in a cross shape (e.g., X-shape) across the opening 332 of the frame 330 to support the interface I of each elastic member 310, thereby preventing the elastic member 310 from sagging due to its weight. The seating rib 338 may be formed to correspond (e.g., equal) to the number of divided elastic members 310.

The elastic members 310 may be seated on the seating rib 338 and thus may maintain the same plane. In a state where the same plane is maintained, neighboring elastic members 310 may be attached to each other by the magnetic force of the magnetic members 320 provided at the interface I where the neighboring elastic members 310 come into contact with each other.

An extension piece 312 in contact with a top surface of a neighboring elastic member 310 may be formed at one side of the elastic member 310. Referring to FIG. 14, the extension piece 312 may function as a component that covers the interface I of the neighboring elastic member 310 to increase sealing strength. The extension piece 312 may be formed at one side of any one of two facing surfaces of the elastic member 310 to be in close contact with a top surface of the neighboring elastic member 310. For example, referring to FIG. 13, the extension piece 312 may overlap the cross shape of the seating rib 338, in a top view.

As shown in FIG. 15, when the internal pressure of the pack case 10 increases to a certain level or higher, the magnetic members 320 that have been attached by a magnetic force may be separated, and each elastic member 310 may be lifted in the third direction, thereby discharging the internal gas of the pack case 10 to the outside through the vent hole 15. Since the one end of the elastic member 310 is fixed to the frame 330, the other end of each elastic member 310 may be bent in the third direction by its own elastic force to open the vent hole 15, thereby discharging the gas.

Thereafter, when the internal pressure decreases due to the gas discharge, the elastic members 310 may be restored to their original positions by an elastic force to be seated on the seating rib 338, and the facing surfaces of the magnetic members 320 may come into contact with each other due to the restoration of the elastic members 310, thereby allowing the magnetic members 120 to be reattached by a magnetic force. Since the vent hole 15 may be resealed by the elastic force of the elastic members 310 and the magnetic force of the magnetic members 320, it is possible to semi-permanently and repeatedly use the opening/closing member 300 (e.g., as compared to a vent that ruptures and is used only once).

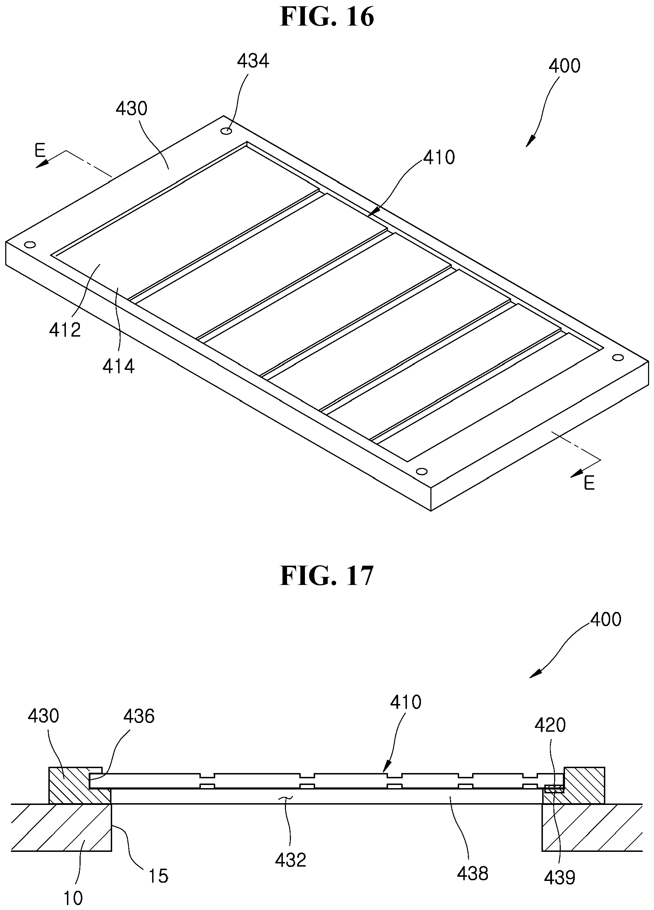

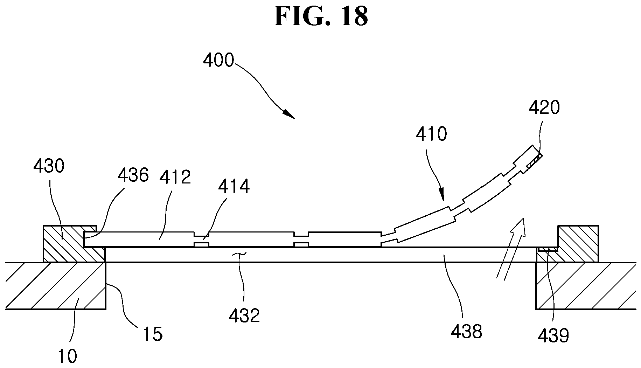

FIG. 16 is a perspective view schematically showing an opening/closing member 440 according to still another embodiment, FIG. 17 is a cross-sectional view along line E-E of FIG. 16, and FIG. 18 is a view for describing the operation of the opening/closing member 400.

Referring to FIGS. 16 to 18, the opening/closing member 400 may include an elastic member 410 that is elastically deformed by a change in internal pressure of the pack case 10 and opens and closes the vent hole 15, and a magnetic member 420 that is provided on the elastic member 410 and generates a magnetic force. The opening/closing member 400 according to the present embodiment may include a frame 430, in which an opening 432 corresponding to the vent hole 15 is formed, with one end of the elastic member 410 fixed to the frame 430, which is mounted on the pack case 10.

The frame 430 may have fastening holes 434 that may be coupled to the pack case 10, a fixing groove 436 to which the one end of the elastic member 410 may be fixed, and a seating end 438 on which edges, excluding the fixed portion of the elastic member 410, may be seated.

The elastic member 410 may be formed as a single elastic member 410 rather than being divided into multiple portions. That is, referring to FIG. 16, the elastic member 410 may be a single elastic member continuously extending between opposite ends of the frame 430 in the length direction of the frame 430 (e.g., in the first direction).

For example, the magnetic member 420 may be provided at the other end of the elastic member 410 (e.g., at the end of the elastic member 410 that is not fixed to the frame 430). In addition, the magnetic member 420 with a magnetic force may be attached to the frame 430 by the magnetic force. That is, referring to FIG. 17, the magnetic member 420 may attach the other end of the elastic member 410 to the frame 430 by the magnetic force.

An attachment portion 439 may be provided on the seating end 438 of the frame 430 corresponding to (e.g., overlapping) the magnetic member 420. The attachment portion 439 may be made of a steel piece or a magnet to which the magnetic member 420 with a magnetic force may be attached. For example, the frame 430 may be made of a steel material to which the magnetic member 420 may be attached.

In another example, the magnetic member 420 may be provided at the remaining sides, excluding the portion of the elastic member 410 fixed to the frame 430. That is, the magnetic member 420 with a magnetic force may be provided at the remaining sides excluding the fixed side of the elastic member 410, and the steel piece may be attached by being provided on the seating end 438 to correspond to the magnetic member 420, thereby sealing the vent hole 15.

The elastic member 410 may include a plurality of cover portions 412 and a joint portion 414 that connects the plurality of cover portions 412 to each other. The plurality of cover portions 412 may be disposed to be spaced apart from each other in the first direction, and the joint portion 414 may connect the cover portions 412 that are disposed to be spaced apart.

The elastic member 410 may be composed of a single material. The elastic member 410 may be made of a polymer that is elastic and capable of withstanding high temperatures. That is, the cover portion 412 and the joint portion 414 that form the elastic member 410 may be made of a single (e.g., same) material, and the joint portion 414 may be formed to have a smaller thickness than the cover portion 412.

Since the joint portion 414 has a higher strain rate by being formed with a smaller thickness than the cover portion 412, the joint portion 414 may have a property of bending more than the cover portions 412. Therefore, the joint portion 414 may serve to control the degree of opening of the vent hole 15 according to the internal pressure of the pack case 10.

Due to this structural feature, as shown in FIG. 18, the elastic member 410 may be sequentially opened from the interface I according to the internal pressure of the pack case 10. For example, when a low pressure is applied inside the pack case 10, one set of cover portions 412 may open as the magnetic members 420 of the interface I are separated, and when a high pressure is applied inside the pack case 10, multiple sets of cover portions may open as the magnetic members 420 of the interface I are separated.

The cover portions 412 may have a smaller size toward the interface I, i.e., in a direction from the fixing groove 436 to the magnetic member 420. Since the elastic member 410 is formed long in the first direction and short in the second direction to have resistance to a bending moment in the second direction and a higher strain rate in the first direction in which the elastic member 410 has a long length, the other end of the elastic member 410 may be bent by being separated from the frame 430, thereby opening the vent hole 15.

Thereafter, when the internal pressure decreases due to the gas discharge, the elastic members 410 may be restored to their original positions by an elastic force to be seated on the seating end 438, and the magnetic members 420 may be reattached to the frame 430 by a magnetic force due to the restoration of the elastic members 410. Since the vent hole 15 may be resealed by the elastic force of the elastic members 410 and the magnetic force of the magnetic members 420, it is possible to semi-permanently and repeatedly use the opening/closing member 400 (e.g., as compared to a vent that ruptures and is used only once).

By way of summation and review, example embodiments are directed to providing a battery pack that can be used semi-permanently by opening a vent hole through its own elastic deformation to discharge gas to the outside when internal pressure increases, and restoring the vent hole to its original shape by a magnetic force to seal the vent hole.

For example, since the opening/closing member according to an example embodiment is formed in multiple stages with joints, it is possible to sequentially open the elastic member according to the internal pressure. For example, since the opening/closing member according to an example embodiment is formed in multiple stages with joints and formed to have varying sizes toward an interface, it is possible to control the degree of opening according to the internal pressure.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A battery pack, comprising:
a pack case with a battery module;
a vent hole in the pack case, the vent hole being configured to discharge to the outside gas generated inside the pack case; and
an opening/closing member in the vent hole, the opening/closing member being configured to open and close the vent hole in conjunction with a change in an internal pressure of the pack case.

2. The battery pack as claimed in claim 1, wherein the opening/closing member includes:
at least one elastic member on the pack case, the at least one elastic member being deformable by the change in the internal pressure of the pack case to open and close the vent hole; and
a magnetic member on the at least one elastic member, the magnetic member being configured to generate a magnetic force.

3. The battery pack as claimed in claim 2, wherein the magnetic member is insert-injected onto the at least one elastic member.

4. The battery pack as claimed in claim 2 or claim 3, wherein the opening/closing member further includes a frame on the pack case, the frame including an opening corresponding to the vent hole, and the at least one elastic member being fixed to the frame and overlapping the vent hole.

5. The battery pack as claimed in any one of claims 2 to 4, wherein the at least one elastic member includes a pair of elastic members facing each other, the magnetic member being bonded to each of the pair of elastic members and defining an interface between the pair of elastic members.

6. The battery pack as claimed in claim 5, wherein the magnetic member at the interface has a multi-stepped shape.

7. The battery pack as claimed in claim 5 or claim 6, wherein the magnetic member at the interface has an inclined surface.

8. The battery pack as claimed in claim 5, claim 6 or claim 7, wherein:
each of the pair of elastic members includes a plurality of cover portions and a joint portion connecting the plurality of cover portions to each other, and
each of the pair of elastic members is configured to sequentially open from the interface according to the internal pressure of the pack case.

9. The battery pack as claimed in claim 8, wherein the joint portion has a smaller thickness than each of the plurality of cover portions.

10. The battery pack as claimed in claim 8 or claim 9, wherein each of the plurality of cover portions includes a core portion, and the joint portion includes an elastic material.

11. The battery pack as claimed in claim 8, claim 9 or claim 10, wherein a length of each of the plurality of cover portions in a first direction decreases toward the interface.

12. The battery pack as claimed in any one of claims 2 to 11, wherein the at least one elastic member includes a plurality of elastic members divided radially based on a center of the vent hole, the magnetic member being at an interface of each of the plurality of elastic members.

13. The battery pack as claimed in any one of claims 2 to 12, wherein the opening/closing member further includes:
a frame on the pack case that includes an opening overlapping the vent hole;
the at least one elastic member being a single elastic member fixed to the frame and overlapping the vent hole;
the magnetic member at an end of the single elastic member; and
an attachment portion on the frame that corresponds to the magnetic member, the attachment portion being attached by the magnetic force of the magnetic member.

14. The battery pack as claimed in claim 13, wherein:
a first side of the single elastic member is fixed to the frame,
the magnetic member is fixed to a second side of the single elastic member, the second side being opposite to the first side, and
the attachment portion overlaps and contacts the magnetic member.

15. The battery pack as claimed in any one of the preceding claims, wherein the opening/closing member is configured to open when the internal pressure of the pack case is 120 mbar or higher.
